(19) **Europäisches Patentamt / European Patent Office / Office européen des brevets**

(11) **EP 2 754 299 B1**

(12) **EUROPÄISCHE PATENTSCHRIFT**

(45) Veröffentlichungstag und Bekanntmachung des Hinweises auf die Patenterteilung:
**13.06.2018 Patentblatt 2018/24**

(21) Anmeldenummer: **12735203.7**

(22) Anmeldetag: **26.06.2012**

(51) Int Cl.:
*H04N 21/442* (2011.01)   *H04N 21/433* (2011.01)
*H04N 21/475* (2011.01)   *H04N 21/438* (2011.01)
*H04N 21/414* (2011.01)

(86) Internationale Anmeldenummer:
**PCT/EP2012/002679**

(87) Internationale Veröffentlichungsnummer:
**WO 2013/034203 (14.03.2013 Gazette 2013/11)**

(54) **VERFAHREN ZUM BETREIBEN EINES DATENEMPFÄNGERS UND DATENEMPFÄNGER, INSBESONDERE IN EINEM FAHRZEUG**

METHOD FOR OPERATING A DATA RECEIVER AND DATA RECEIVER, IN PARTICULAR IN A VEHICLE

PROCÉDÉ DE FONCTIONNEMENT D'UN RÉCEPTEUR DE DONNÉES AINSI QUE RÉCEPTEUR DE DONNÉES, EN PARTICULIER DANS UN VÉHICULE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **10.09.2011 DE 102011113202**

(43) Veröffentlichungstag der Anmeldung:
**16.07.2014 Patentblatt 2014/29**

(73) Patentinhaber: **Volkswagen Aktiengesellschaft 38440 Wolfsburg (DE)**

(72) Erfinder:
• **HEHN, Thorsten**
  **38444 Wolfsburg (DE)**
• **KRAUSE, Jens**
  **38104 Braunschweig (DE)**
• **THÜRMANN, Urs**
  **38162 Cremlingen (DE)**
• **WEISER, Martin**
  **31224 Peine (DE)**

(56) Entgegenhaltungen:
**EP-A2- 1 107 601        US-A1- 2005 216 951**
**US-A1- 2007 263 066**

EP 2 754 299 B1

## Beschreibung

Die vorliegende Erfindung betrifft ein Verfahren zum Betreiben eines Datenempfängers für Audio- und/oder Videodaten, bei dem eine geplante Programmtitelfolge mit mehreren Programmtiteln erfasst wird, Audio- und/oder Videodaten zu wenigstens einem Programmtitel über eine Datenverbindung empfangen und zwischengespeichert werden und Audio- und/oder Videodaten wenigstens eines Programmtitels wiedergegeben werden. Die vorliegende Erfindung betrifft ferner einen dazugehörigen Datenempfänger sowie ein damit verbundenes Medienwiedergabesystem, insbesondere in einem Fahrzeug.

Die vorliegende Erfindung eignet sich für personalisierte Radio- und Fernsehdienste, bei dem für einen Nutzer ein personalisiertes Programm wiedergegeben werden soll. Das Programm kann sich dabei aus beliebigen Programmbeiträgen zusammensetzen, z.B. aus einer Mischung von Musikstücken, Hörspielen, Reportagen und Nachrichten. Jeder Programmbeitrag umfasst dabei Audio- und/oder Videodaten, die von dem Datenempfänger über eine Datenschnittstelle zu empfangen sind. Jedem Programmbeitrag ist ferner ein Programmtitel und eine Datenquelle zugeordnet, die auf den Speicherplatz der dazugehörigen Audio- und/oder Videodaten verweist. Personalisierte Radio-Dienste erfreuen sich zunehmender Beliebtheit. Dabei kann ein Nutzer z.B. über eine Internetverbindung eine Vorgabe des wiederzugebenden Programms machen, indem er beispielsweise Titelwünsche, Musikinterpreten und Musikrichtungen vorgibt. Er kann auch allgemeine Vorgaben machen indem er z.B. ein vorab definiertes Profil auswählt oder eine Stimmungslage angibt, in deren Abhängigkeit dann eine dazugehörige Programmtitelfolge erzeugt wird. Die Audiodaten der entsprechenden Titel werden dann zeitnah einzeln über die Internetverbindung an den Datenempfänger übermittelt, von dem sie über ein Wiedergabesystem dem Nutzer vorgespielt werden. Das Programm wird dabei typischerweise von einem Dienstanbieter vorgeschlagen, über den auch die Audio- und/oder Videodaten bereitgestellt werden. Alternativ kann der Programmvorschlag aber auch anders erzeugt werden, indem z.B. von einer Person lokal am Datenempfänger eine Programmtitelfolge eingegeben wird und darauf basierend ein Programm für diese und/oder weitere Personen wiedergegeben wird.

Der Nutzer hat dabei die Möglichkeit, in verschiedenem Maße lenkend in den Abspielvorgang einzugreifen, indem er dem Dienstanbieter seine Zustimmung oder sein Missfallen mitteilt. Diese Mitteilungen werden ausgewertet und können ein frühzeitiges Beenden des aktuell wiedergegebenen Titels bewirken und Auswirkungen für das nachfolgende Programm haben. Dazu werden Ähnlichkeiten zwischen möglichen wiederzugebenden Titeln bestimmt, sodass Titel untereinander vergleichbar sind und entsprechend ihren Ähnlichkeiten bestimmten Kategorien zugeordnet werden können. Im weiteren Programmverlauf können so bestimmte Kategorien z.B. aus dem Programm verbannt werden.

Bekannte Wiedergabesysteme für personalisierte Radioprogramme und andere Dienste laden den aktuell wiederzugebenden Titel über die Datenverbindung herunter und beginnen mit der Wiedergabe, sobald ein bestimmter Anteil der zu dem Titel gehörigen Audio- und/oder Videodaten vom Datenempfänger empfangen wurde.

Bei einer gestörten Übertragung über die Datenschnittstelle müssen die Audio- und oder Videodaten vorausschauend an den Datenempfänger übermittelt werden, um zu vermeiden, dass es zu Übertragungslücken und somit zu zeitweiligen Programmausfällen kommt. Eine solche Situation tritt insbesondere bei einer Datenübertragung über eine Mobilfunkschnittstelle auf, kann aber auch bei drahtgebundenen Datenschnittstellen auftreten, z.B. bei Überlastung der Übertragungskapazitäten oder eines Servers. Dabei muss für personalisierte Programme noch zusätzlich berücksichtigt werden, dass das abzuspielende Programm wegen nicht exakt vorauszusehender Nutzerinteraktionen abrupt geändert werden kann.

Die US 2011/0035031 A1 beschreibt ein personalisiertes Unterhaltungssystem, bei dem ein Präferenzprofil eines Nutzers bestimmt wird und die Unterhaltungsbeiträge in Abhängigkeit von dem Präferenzprofil ausgewählt wird. Zum Bestimmen des Präferenzprofils des Nutzers werden gespeicherte Mediendateien sowie Nutzerreaktionen auf das laufende Programm analysiert. Bei wechselnder Verfügbarkeit von empfangbaren Radiosendern während der Fahrt in einem Fahrzeug kann dabei automatisch ein in Bezug zur Sendefrequenz benachbarter Radiosender ähnlicher Stilrichtung gesucht und eingestellt werden.

In der DE 101 19 067 A1 ist ein Verfahren zum personalisierten Abspielen von Multimediadateien mit einem Unterhaltungsgerät beschrieben. Multimediadateien können dabei mittels Mobilfunk oder Rundfunk empfangen, anhand eines Benutzerprofils abgespeichert und zeitunabhängig wiedergegeben werden.

In der DE 10 2010 008 427 A1 ist ein Verfahren zum verzögerten Abspielen von Audiodateien in einem Fahrzeug beschrieben, bei dem abzuspielende Dateien vorausschauend geladen und beim Empfänger zwischengespeichert werden. Während eines Fahrzeugneustarts können dann die zwischengespeicherten Daten abgespielt werden, auch wenn die Verbindung zur Datenquelle durch den Neustart gestört oder kurzfristig unterbrochen wurde.

Die letztgenannten Verfahren haben allerdings den Nachteil, dass die Übertragung von Audio- und/oder Videodaten für ein personalisiertes Programm bei einer gestörten Datenverbindung unter Umständen ein Zwischenspeichern einer größeren Menge von Audio- und/oder Videodaten erfordert. Dies stellt dann höhere Systemanforderungen an den Datenempfänger, in dem die Audio- und/oder Videodaten gespeichert werden müssen. Des Weiteren kann der Ansatz, vorab größere Mengen von Audio- und/oder Videodaten zwischenzuspeichern, zu unbefriedigenden Programmvorschlägen führen, weil die Aktualität der Programmbeiträge nicht hinreichend gut berücksichtigt werden kann.

US-A1-2007/263966 offenbart die Merkmale des Oberbegriffs des Anspruchs 1.

Es ist die Aufgabe der vorliegenden Erfindung, ein Verfahren zum Betreiben eines Datenempfängers für Audio- und/oder Videodaten der eingangs genannten Art sowie einen dazugehörigen Datenempfänger bereitzustellen, welche auf ressourcenschonende Weise die Verfügbarkeit eines personalisierten Audio- und/oder Videoprogramms verbessern. Diese Aufgabe wird erfindungsgemäß durch ein Verfahren mit den Merkmalen des Anspruchs 1 und durch einen Datenempfänger mit den Merkmalen des Anspruchs 9 gelöst. Vorteilhafte Aus- und Weiterbildungen ergeben sich aus den abhängigen Ansprüchen. Die Übertragungsressourcen der Datenverbindung für zu übertragende und zwischenzuspeichernde Audio- und/oder Videodaten werden auf wenigstens zwei noch nicht wiedergegebene Programmtitel vom Datenempfänger aufgeteilt. Dies ermöglicht es, situationsabhängig unterschiedliche Vorladestrategien umzusetzen. So kann das Übertragen und Zwischenspeichern nicht nur des nachfolgenden Programmtitels, sondern weiterer Programmtitel dann sinnvoll oder sogar nötig sein, wenn bei plötzlichen Änderungen des geplanten Programms kurzfristig die Übertragungsressourcen eingeschränkt werden. Falls dann nur der nachfolgende Programmtitel teilweise vorgeladen wurde, dieser nun aber gelöscht oder in der Programmtitelfolge nach hinten geschoben wird, würde die Strategie des Zwischenspeicherns versagen.

Bei personalisierten Diensten muss systemseitig immer mit einer Nutzerinteraktion gerechnet werden, d.h. dass im konkreten Falle der Nutzer aktiv in die geplante Programmtitelfolge eingreifen will oder es wenigstens Hinweise darauf gibt, dass er dies möglicherweise tun wird. Dies ist unabhängig davon, ob solche Hinweise auf eine Nutzerreaktion erfassbar sind oder tatsächlich erfasst werden. In einer vorteilhaften Ausgestaltung des erfindungsgemäßen Verfahrens werden Hinweise auf ein Nutzerverhalten bezüglich einem wiedergegebenen Programmtitel erfasst. Der relative Anteil an den Übertragungsressourcen der Datenverbindung für zu übertragende und zwischenzuspeichernde Audio- und/oder Videodaten wenigstens zweier noch nicht wiedergegebener Programmtitel wird dann in Abhängigkeit von wenigstens einem erfassten Hinweis auf ein Nutzerverhalten verändert. Dies ermöglicht es, aus dem Nutzerverhalten die Akzeptanz des geplanten Programms abzuschätzen und somit eine vorausschauende und effiziente Zuteilung der zur Verfügung stehenden Übertragungsressourcen für die zwischenzuspeichernden und wiederzugebenden Audio- und/oder Videodaten der Programmtitel aus der vorgeschlagenen Programmtitelfolge zu unterstützen.

Der Programmtitel stellt im engeren Sinne nur eine Verbindung zu den dazugehörigen Audio- und/oder Videodaten her, ohne diese jedoch zu umfassen. Daher wird im Folgenden neben dem Begriff "Programmtitel" auch der Begriff "Programmbeitrag" verwendet, der sowohl den Programmtitel, eine dazugehörige Datenquelle als auch die dazugehörigen Audio- und/oder Videodaten umfasst. Unter der Wiedergabe eines Programmtitels oder Programmbeitrags ist im Folgenden die Wiedergabe der dazugehörigen Audio- und/oder Videodaten zu verstehen, wobei der Programmtitel selbst und die Datenquelle optional angezeigt werden können, aber nicht müssen. Sie können z.B. in einer Fußzeile eines wiedergegeben Videos eingeblendet werden.

Die Datenverbindung zum Übertragen der Audio- und/oder Videodaten weist insbesondere eine typbedingt zeitlich veränderte Übertragungsrate auf, welche vom Datenempfänger nicht steuerbar ist. Es handelt sich beispielsweise um eine Mobilfunkverbindung.

Hinweise auf ein Nutzerverhalten bezüglich eines wiedergegeben Programmtitels umfassen im Sinne der Erfindung alle erfassbaren direkt oder indirekt messbaren Reaktionen des Nutzers während der Wiedergabe eines Programmbeitrags. Sie umfassen Handlungen des Nutzers, wie z.B. Sprechen oder das Ausführen von Gesten. In einer Ausführungsform wird die Mimik des Nutzers z.B. durch eine Kamera erfasst, um daraus eine Emotion des Nutzers abzuleiten.

Je nach Ausgestaltung des erfindungsgemäßen Verfahrens werden aus der Interaktion des Nutzers mit dem Datenempfänger und/oder dem Wiedergabegerät Hinweise auf ein Nutzerverhalten erfasst. Der Nutzer verändert beispielsweise die Lautstärkewiedergabe oder er gibt ein Eingabesignal zum Überspringen des aktuell wiedergegebenen Programmbeitrags ein. Aus der Lautstärkewiedergabe und der Verweildauer bei einem Programmbeitrag werden somit Rückschlüsse auf die nutzerseitige Zustimmung oder das Ablehnen des aktuell wiedergegebenen Programmbeitrags gezogen.

Beim Einsatz des erfindungsgemäßen Verfahrens in einem Fahrzeug können des Weiteren Informationen zum Fahrstil des Fahrers gewonnen werden, z.B. ob der Fahrer die Fahrzeuggeschwindigkeit verändert. Insbesondere erlaubt die Änderung des Fahrstils bei konstanter Fahrsituation Rückschlüsse auf die Akzeptanz des Beitrags.

Einzelne Hinweise auf ein Nutzerverhalten müssen dabei nicht tatsächlich in ursächlichem Zusammenhang mit dem aktuellen Programmbeitrag stehen. Sie können beispielsweise auch zufällig in den Zeitraum der Wiedergabe eines Programmbeitrags fallen. Gemäß einem Ausführungsbeispiel der Erfindung ist daher vorgesehen, dass für mehrere unterscheidbare Hinweise auf ein Nutzerverhalten ermittelt wird, mit welcher Wahrscheinlichkeit bei Erfassen eines Hinweises eines bestimmten Nutzerverhaltens dem wiedergegebenen Programmtitel eine bestimmte Akzeptanzkategorie zugeordnet wird, und dass in Abhängigkeit von mehreren so ermittelten Wahrscheinlichkeiten dem wiedergegebenen Programmtitel ein Akzeptanzprofil zugeordnet wird. Der relative Anteil an den Übertragungsressourcen der Datenverbindung für zu übertragende und zwischenzuspeichernde Audio- und/oder Videodaten wenigstens zweier noch nicht wiedergegebener Programmtitel wird dann in Abhängigkeit von dem Akzeptanzprofil des wiedergegebenen Programmtitels verändert. Hierdurch können die Hinweise als unabhängige Parameter betrachtet und ausgewertet werden. Dies ermöglicht einen robusten Algorithmus für die Ermittlung der Wahrscheinlichkeiten, dass nach Auswertung ggf. vieler Hinweise auf ein Nutzerverhalten ein bestimmter Programmtitel einer Akzeptanzkategorie zugeordnet wird. Im erfindungsgemässen Verfahren ist vorgesehen, dass die Aufteilung oder die Veränderung des relativen Anteils an den Übertragungsressourcen für zu übertragende und zwischenzuspeichernde Audio- und/oder Videodaten wenigstens zweier noch nicht wiedergegebener Programmtitel von der Position eines Programmtitels in der Programmtitelfolge und/oder der verbleibenden noch zu übertragenden Datenmenge eines Programmtitels abhängt. Hierdurch kann die vorausschauende Steuerung der Übertragungsressourcen bei einer Programmänderung weiter verbessert werden. Beispielsweise können so größere Audio- und/oder Videodateien mit höherer Priorität übertragen werden, wenn sie durch Wegfall eines oder mehrerer in der Programmtitelfolge vor ihnen stehender Programmtitel nun früher als erwartet wiedergegeben werden sollen, wegen kurzfristig eingeschränkten Übertragungsressourcen eine rechtzeitige ad-hoc Übertragung ohne teilweise Vorpufferung jedoch nicht mehr garantiert werden könnte.

Es kann insbesondere vorgesehen sein, dass mehrere noch nicht wiedergegebene Programmtitel in der Programmtitelfolge alternative Programmtitel sind, die alternativ zueinander nach der Beendigung des wiedergegeben Programmtitels wiederzugeben sind. Diese Programmtitel konkurrieren miteinander, wobei nur einer von ihnen ausgewählt wird und die anderen verworfen werden. Der Vorteil ist, dass sehr verschiedene Programmtitel versuchsweise in die Programmtitelfolge aufgenommen werden können und je nach nutzerseitiger Zustimmung oder Ablehnung die allgemeine Linie des Programms beibehalten oder auch abrupt geändert werden kann. So können immer Gruppen von mehreren Programmtiteln vorgesehen sein, von denen wenigstens einer dem gerade wiedergegebenen Programmtitel ähnlich ist und wenigstens einer signifikante Unterschiede hierzu aufweist. Ein solcher Programmtitel unterscheidet sich z.B. in wenigstens einem Attribut, z.B. im Interpreten oder der Stilrichtung des Musiktitels. Im erfindungsgemäßen Verfahrens ist vorgesehen, dass die Gewichtung der Faktoren, in deren Abhängigkeit die relativen Anteile an den Übertragungsressourcen für zu übertragende und zwischenzuspeichernde Audio- und/oder Videodaten verändert werden, während des Betriebs des Datenempfängers verändert wird. Für die Ressourcenzuteilung wird beispielweise im Laufe des Verfahrens bestimmten Hinweisen auf ein Nutzerverhalten eine immer geringere Bedeutung beigemessen oder die noch zu übertragender Datenmenge und die aus der Akzeptanzkategorie abgeleitete Akzeptanz eines Programmtitel neu gewichtet.

In den bislang genannten Fällen werden die zur Verfügung stehenden Übertragungsressourcen für nachfolgende Programmtitel vorsorglich verändert, für den Fall, dass es zu einer Änderung in der Programmtitelfolge kommt. Findet diese nun tatsächlich statt, kann die geplante Programmtitelfolge in Abhängigkeit von einem Hinweis auf ein Nutzerverhalten verändert werden.

Gemäß einer Weiterbildung des erfindungsgemäßen Verfahrens wird in Abhängigkeit von Veränderungen der Programmtitelfolge, den verfügbaren Übertragungsressourcen, deren Variabilität und/oder der zu übertragenden Datenmenge eines dem wiedergegebenen Programmtitel folgenden Programmtitels ein Datenformat festgelegt, welches die Übertragungsrate der folgenden Programmtitel bestimmt. Das Datenformat umfasst insbesondere das Quellkodierungsverfahren, auch als Codec bezeichnet, mit dem die zu übertragenden Daten komprimiert wurden. Die Datenrate, welche zur Wiedergabe in Echtzeit benötigt wird, kann dabei je nach Codec unterschiedlich sein. Die Festlegung eines neuen Datenformats hat somit den Vorteil, dass die Datenübertragung der Audio- und/oder Videodaten an die Übertragungsbedingungen angepasst werden kann. So kann bei geringeren Übertragungsraten oder bei drohender Übertragungsunterbrechung ein Codec mit einem geringeren Bedarf an Datenrate die zu übertragenden Daten bei ggf. leichten Qualitätseinbußen schneller übertragen. Andererseits kann bei ausreichend verfügbarer Datenrate für die Übertragung ein Codec gewählt werden, der eine verbesserte Bild- und/oder Tonqualität bereitstellt.

In noch einer Weiterbildung des erfindungsgemäßen Verfahrens ist vorgesehen, dass die Programmtitelfolge lokal gespeicherte, nicht über die Datenschnittstelle übertragene Programmtitel umfasst. Dem Nutzer kann beispielsweise ein Programm basierend auf lokal gespeicherten Programmbeiträgen vorgeschlagen werden, das aber durch einzelne über die Datenverbindung empfangbare Programmtitel erweiterbar ist. Dies ermöglicht auch bei einer wenig zuverlässigen oder situationsbedingt teuren Datenverbindung die Bereitstellung eines abwechslungsreichen Programms, das den Geschmack des Nutzers trifft. Der Nutzer empfängt das Programm beispielsweise in einem Fahrzeug während einer Überlandfahrt mit schlechter Mobilfunkabdeckung seines Mobilfunkanbieters und guter Abdeckung eines fremden Netzbetreibers, bei dem aber teure Roaming-Gebühren anfallen würden. Insbesondere kann in einem solchen Fall optional ein lokal gespeicherter Programmtitel an vorderster Position der Programmtitelfolge eingefügt werden, wenn durch zu geringe Übertragungsressourcen kein über die Datenverbindung übermittelter Programmtitel abspielbar ist.

Ferner kann optional die lokal gespeicherten Programmtitel in der Programmtitelfolge in Abhängigkeit von einem zuvor definierten Auswählalgorithmus, in Abhängigkeit von zu übertragenden Programmtiteln in der Programmtitelfolge und/oder in Abhängigkeit von der bislang erfassten Historie der Hinweise auf ein Nutzerverhalten ausgewählt werden. Beispielsweise wurde vom Dienstanbieter ein generisches Empfehlungsprogramm empfangen, welches die bislang wiedergegebenen Programmbeiträge, den als nächstes vorgesehenen Programmbeitrag und die bislang erfolgen Nutzerreaktionen auf die wiedergegebenen Programmbeiträge als Inputparameter benutzt, um einen Ersatz-Programmtitel als Outputparameter zu erzeugen, falls der als nächstes vorgesehene Programmbeitrag nicht erfolgreich übertragen wird oder die Übertragung zu scheitern droht. Ein solcher Ersatz-Programmtitel kann über einen definierten Algorithmus kontinuierlich im Hintergrund berechnet und aktualisiert werden, unabhängig davon, ob dieser nun tatsächlich als Ersatz wiedergegeben werden soll oder nicht.

Der erfindungsgemäße Datenempfänger umfasst Mittel zum Erfassen einer geplanten und veränderbaren Programmtitelfolge mit mehreren Programmtiteln, eine Datenschnittstelle zum Empfangen von Audio- und/oder Videodaten und eine Speichereinheit zum Zwischenspeichern von über die Datenschnittstelle empfangenen Audio- und/oder Videodaten zu wenigstens einem Programmtitel. Der Datenempfänger umfasst des Weiteren eine Schnittstelle zu einem Medienwiedergabesystem für Audio- und/oder Videodaten wenigstens eines Programmtitels und eine Steuereinheit, die mit den Mitteln zum Erfassen einer geplanten und veränderbaren Programmtitelfolge, der Datenschnittstelle, der Speichereinheit und der Schnittstelle zur Wiedergabevorrichtung verbunden ist. Der erfindungsgemäße Datenempfänger ist dadurch gekennzeichnet, dass mittels der Steuereinheit die Übertragungsressourcen der Datenschnittstelle auf zu übertragende und zwischenzuspeichernde Audio- und/oder Videodaten wenigstens zweier noch nicht wiedergegebener Programmtitel vom Datenempfänger aufteilbar sind. Der erfindungsgemäße Datenempfänger ist insbesondere zum Durchführen des erfindungsgemäßen Verfahrens geeignet. Er weist somit auch die Vorteile des erfindungsgemäßen Verfahrens auf.

Der erfindungsgemäße Datenempfänger umfasst vorteilhafterweise eine Erfassungseinrichtung zum Erfassen von Hinweisen auf ein Nutzerverhalten bezüglich einem wiedergegeben Programmtitel, mithilfe dessen die Nutzerakzeptanz des gegenwärtig wiedergegebenen Programmtitels noch besser abgeschätzt werden kann.

Erfindungsgemäß ist ein Medienwiedergabesystem für Audio- und/oder Videodaten für ein Fahrzeug mit einem solchen Datenempfänger verbunden. Insbesondere handelt es sich bei dem Medienwiedergabesystem um ein Fahrzeuginfotainmentsystem, über welches fest gespeicherte Programmbeiträge und/oder Programmbeiträge von lösbar verbundenen Datenträgern wiedergegeben werden können. Es können z.B. Audio- und/oder Videodaten von CDs (Compact Disc), DVDs (Digital Versatile Disc) oder Memory-Sticks (z.B. Datenträger von Audiodaten) wiedergegeben werden. Diese lokal verfügbaren Programmbeiträge wurden dabei idealerweise bereits vorher derart klassifiziert, dass sie mit anderen, insbesondere mit den geplanten Programmbeiträgen verglichen werden können. In einer Ausgestaltung der Erfindung ist auch eine Klassifizierung der lokal verfügbaren Programmbeiträge möglich.

Erfindungsgemäß ist des Weiteren ein Fahrzeug mit einem solchen Datenempfänger und/oder Medienwiedergabesystem ausgestattet.

Die Erfindung wird nun anhand von Ausführungsbeispielen mit Bezug zu den Figuren näher erläutert.

Figur 1        zeigt die Ansicht eines Cockpits eines Fahrzeugs, welches mit einem Medienwiedergabesystem gemäß einem Ausführungsbeispiel der Erfindung ausgestattet ist,

Figur 2        zeigt schematisch den Aufbau eines Medienwiedergabesystems mit einem Datenempfänger in Funkverbindung mit einem Dienstanbieter gemäß einem Ausführungsbeispiel der Erfindung,

Figur 3        zeigt einen Ressourcen-Zuteiler des Datenempfängers gemäß einem Ausführungsbeispiel der Erfindung,

Figur 4        zeigt schematisch eine Zuordnung von Hinweisen auf ein Nutzerverhalten auf bestimmte Akzeptanzkategorien gemäß einem Ausführungsbeispiel der Erfindung und

die Figuren 5A - 5F    zeigen schematisch Programmtitelfolgen, deren Programmtitel gemäß einem Ausführungsbeispiel des erfindungsgemäßen Verfahrens vom Datenempfänger anteilige Übertragungsressourcen zugewiesen werden.

Der erfindungsgemäße Datenempfänger und das erfindungsgemäße Verfahren werden im Folgenden anhand eines Ausführungsbeispiels in Zusammenhang mit einem Medienwiedergabesystem in einem Fahrzeug erläutert. Es wird jedoch darauf hingewiesen, dass sich der erfindungsgemäße Datenempfänger und das erfindungsgemäße Verfahren auch für andere Einsatzbereiche eignen. Sie können beispielsweise auch für stationäre oder tragbare Geräte verwendet werden, mittels welcher personalisierte Programme über eine in der Übertragungsrate schwankenden Datenverbindung, insbesondere einer Mobilfunkverbindung, empfangbar sind.

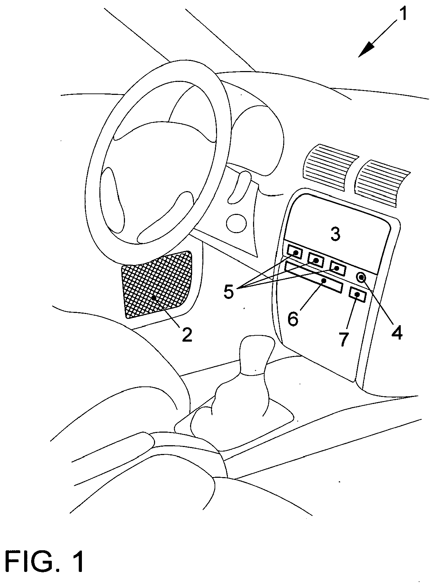

In der Figur 1 ist ein Cockpit eines Fahrzeugs 1 dargestellt, das mit einem Medienwiedergabesystem gemäß einem Ausführungsbeispiel der Erfindung ausgestattet ist. Das Medienwiedergabesystem umfasst Ein- und Ausgabemittel zum Bedienen des Medienwiedergabegeräts und zur Medienwiedergabe. Es umfasst insbesondere einen oder mehrere Lautsprecher 2 zur Ausgabe akustischer Medien, insbesondere personalisierten Radiogrogrammen. Die Lautsprecher 2 sind beispielsweise nach an sich bekannter Art in den Türen, in Teilen des Cockpits oder an anderen geeigneten Stellen im Fahrzeug 1 angeordnet. Das Medienwiedergabesystem umfasst des Weiteren ein Display 3, einen Lautstärkeregler 4, weitere Bedientasten 5, einen CD-Spieler 6 sowie einen MP3-Spieler 7 (MP3 = Moving Picture Expert Group Audio Layer 3), welche in einem Modul im oberen Bereich der Mittelkonsole angeordnet sind, sodass sie von Fahrer und Beifahrer gut eingesehen und bedient werden können. Über den CD-Spieler 6 und den MP3-Spieler 7 können Musiktitel oder andere Audioprogrammbeiträge von lokal verfügbaren Audiodatenträgern im Fahrzeug 1 abgespielt werden. Auf dem Display 3 können nicht nur Videodaten wiedergegeben werden, sondern auch beispielsweise Informationen zu einem aktuell wiedergegebenen Programmtitel angezeigt werden.

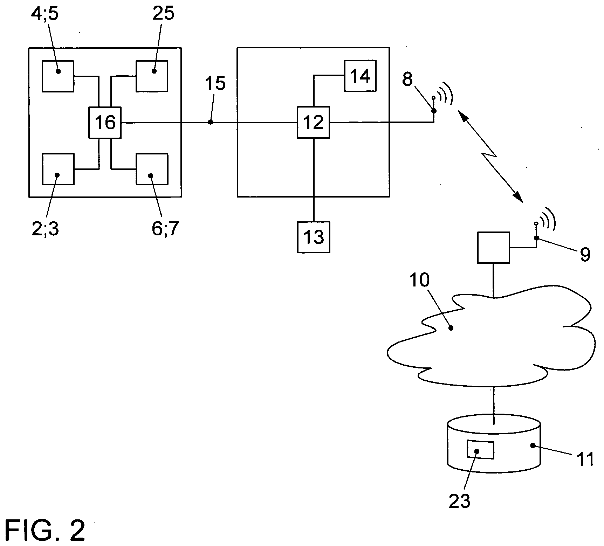

In der Figur 2 ist schematisch der Aufbau eines Medienwiedergabesystems mit einem Datenempfänger gemäß einem Ausführungsbeispiel der Erfindung dargestellt. Das Medienwiedergabesystem umfasst dabei des Weiteren einen Prozessor 16, der mit den Ein- und Ausgabemitteln 2 - 5 sowie dem CD-Spieler 6 und dem MP3-Spieler 7 verbunden ist und diese steuert. Ferner kann das Medienwiedergabesystem über die Schnittstelle 15 vom Datenempfänger Audio- und oder Videodaten zum Wiedergeben über die Lautsprecher 2 und/oder das Display 3 empfangen.

In dem Medienwiedergabesystem ist ferner ein Empfehlungsgeber 25 als ausführbares Programm installiert, welches in Abhängigkeit von Inputparametern nach einem definierten Algorithmus lokal im Medienwiedergabesystem gespeicherte Musiktitel oder andere Audioprogrammbeiträge empfehlen kann.

Der Datenempfänger umfasst ein Nutzererfassungssystem 13 oder ist mit einem solchen verbunden. Mithilfe des Nutzererfassungssystems 13 können Hinweise auf ein Nutzerverhalten bezüglich einem wiedergegebenen Programmtitel erfasst werden, wie dies weiter unten in Zusammenhang mit dem erfindungsgemäßen Verfahren noch näher erläutert wird. Das Nutzererfassungssystem umfasst z.B. ein Kamerasystem zum Erfassen der Nutzermimik, um daraus Rückschlüsse über die Nutzerverfassung und damit über die mögliche Zustimmung für oder Ablehnung gegen den gegenwärtig wiedergegebenen Programmtitel ziehen zu können.

Der Datenempfänger umfasst des Weiteren ein Mobilfunkmodul 8, mithilfe dessen eine Mobilfunkverbindung in ein Mobilfunknetz 9 aufgebaut werden kann. Über die Mobilfunkschnittstelle 8, 9 können unter anderem Audio- und/oder Videodaten empfangen werden, die in einem Zwischenspeicher 14 zwischengespeichert werden können. Der Zwischenspeicher 14, das Nutzererfassungssystem 13, die Schnittstelle 15 zum Medienwiedergabesystem und das Mobilfunkmodul 8 sind mit einer Steuereinheit 12 des Datenempfängers verbunden.

Der Datenempfänger steht in Funkverbindung mit einem Dienstanbieter 11, der über das Internet 10 mit dem Mobilfunknetz 9 verbunden ist. Der Dienstanbieter 11 stellt personalisierte Hörfunkprogramme bereit, die insbesondere Musiktitel, Reportagen und Nachrichten umfassen. Die einzelnen Programmbeiträge können dabei durch Attribute beschrieben werden, sodass zwei Programmbeiträge bezüglich ihrer Ähnlichkeit miteinander verglichen werden können. Auf diese Weise kann von der Akzeptanz eines Programmtitels mit einer gewissen Wahrscheinlichkeit auf die Akzeptanz eines anderen Programmtitels geschlossen werden.

Durch eine an sich bekannte Prozedur kann der Nutzer des Medienwiedergabesystems, z.B. der Fahrer des Fahrzeugs 1, sich bei dem Dienstanbieter 11 einbuchen und ein personalisiertes Programm anfordern. Vom Dienstanbieter 11 wird sodann eine Programmtitelfolge 23 vorgeschlagen und über das Mobilfunkmodul 8 des Datenempfängers empfangen.

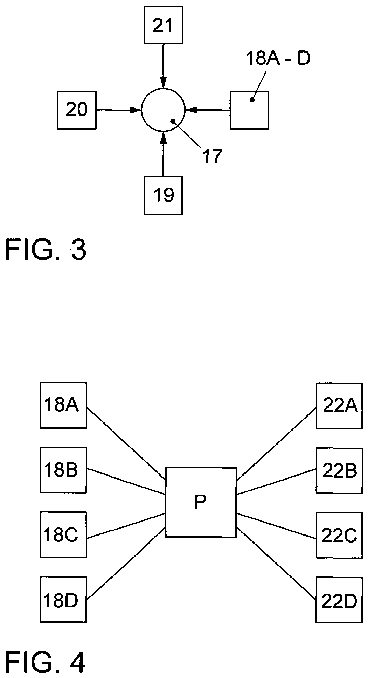

Das erfindungsgemäße Verfahren wird nun anhand der Figuren 3 bis 5F näher erläutert. Zum Durchführen des Verfahrens kann insbesondere das Medienwiedergabesystem mit dem Datenempfänger, der über eine Funkverbindung 8, 9 mit einem Dienstanbieter 11 verbunden ist, verwendet werden, wie dies mit Bezug zu der Figur 2 beschrieben wurde.

Es wird im Folgenden davon ausgegangen, dass die Datenverbindung zum Empfangen der Audiodaten als solche vom Datenempfänger nicht direkt beeinflussbar ist. Nach dem Verbindungsaufbau wird insbesondere die Übertragungsrate vom Mobilfunknetz 9 bestimmt. Es handelt sich beispielsweise um eine Datenverbindung über ein UMTS-Netz (UMTS = Universal Mobile Telecommunication System) mit HSDPA Übertragungsverfahren (HSDPA = High Speed Downlink Packet Access), bei dem netzseitig in Abhängigkeit von einer Reihe von Verbindungsparametern von Verbindungen zu allen in einer Mobilfunkzelle befindlichen Teilnehmern einem jeden Teilnehmer ein individuelle Datenübertragungsrate zugewiesen wird. Dabei greifen eine Reihe von Mechanismen, die laufend gegeneinander abgewogen werden müssen. Je nachdem, welchen Datenservice der Teilnehmer angefordert hat, wie gut die Verbindung der einzelnen Teilnehmer zur Basisstation ist und wie viele Teilnehmer sich in der betreffenden Funkzelle befinden, wird die Datenübertragungsrate derart zugewiesen, dass der Datendurchsatz in der Zelle möglichst groß ist, aber mit der Randbedingung, dass kein Teilnehmer zu stark bevorzugt oder benachteiligt wird (z.B. gemäß dem sogenannten "channel dependent scheduling" oder "fair scheduling"). Beispielsweise werden Echtzeitdienste, z.B. Sprache, mit höherer Priorität als Datendienste behandelt. Ferner kann durch die laufend wechselnde Teilnehmerkonstellation in der Mobilfunkzelle der Gesamtdurchsatz stark variieren. Die Datenübertragungsrate, die ein bestimmter Teilnehmer zugewiesen bekommt, kann in ungünstigen Fällen rapide sinken. Im Falle eines Handovers in eine andere Funkzelle oder wenn das Mobilfunkmodul 8 in einen Abschattungsbereich eintritt, kann die Datenverbindung sogar minutenlang ganz unterbrochen werden.

Die Steuereinheit 12 des Datenempfängers veranlasst bei Erhalt der Programmtitelfolge 23, dass die zum ersten Programmtitel gehörigen Audiodaten heruntergeladen werden. Die Audiodaten können sich dabei auf einem Server des Dienstanbieter 11 befinden. Die Audiodaten können auch z.B. an einer anderen Stelle im Internet 10 gespeichert sein, wobei der Dienstanbieter 11 beim Übermitteln der Programmtitelfolge 23 die Quellenangabe, z.B. einen entsprechenden Internet-Link, zusätzlich übermittelt.

Alternativ kann die Programmtitelfolge 23 auch anders erzeugt werden. Sie wird beispielsweise lokal von einem Nutzer im Fahrzeug 1 für alle Fahrzeuginsassen erstellt, indem sie über die Bedientasten 5 in das Medienwiedergabesystem eingegeben und an den Datenempfänger über die Schnittstelle 15 übermittelt wird. Die Audiodaten zu der eingegebenen Programmtitelfolge können dann über die Mobilfunkschnittstelle 8, 9 empfangen werden, indem sie von einem Server, z.B. dem des Dienstanbieters 11, heruntergeladen werden.

Einerseits müssen aufgrund der schwankenden Übertragungsressourcen die Audiodaten wenigstens teilweise zwischengespeichert werden, um einen durchgängigen Dienst garantieren zu können. Andererseits wäre das Herunterladen in strikter Reihenfolge gemäß der empfangenen Programmtitelfolge 23 riskant, weil die Nutzerakzeptanz des vorgeschlagenen Programms nicht sicher ist und der Nutzer bei dem personalisierten Programm erwartet, dass er steuernd eingreifen darf. Es müssen daher Rückfalllösungen vorgehalten werden, für den Fall, dass die Programmtitelfolge verändert wird und/oder die zur Verfügung stehende Übertragungsrate sich plötzlich vermindert.

In der Figur 3 ist ein Ressourcen-Zuteiler 17 gezeigt, dessen Algorithmus in der Steuereinheit 12 des Datenempfängers gespeichert ist. Der Ressourcen-Zuteiler 17 teilt die zur Verfügung stehenden Übertragungsressourcen auf mehrere noch zu übertragende und zwischenzuspeichernde Audiodaten der Programmtitel selbsttätig auf, ohne dass bei der Ressourcen-Zuteilung ein Eingriff des Dienstanbieters 11 nötig wäre. Die Ressourcenzuteilung erfolgt dabei lokal in der Steuereinheit 12 mittels des TCP-Übertragungsprotokolls (TCP = Transmission Control Protocol), welches die Übertragung über das Internetprotokoll (IP) derart regelt, dass lokal im Datenempfänger eine Aufteilung der Übertragungsrate auf einzelne Programmtitel erfolgt.

Der Ressourcen-Zuteiler 17 ist mit einem Akzeptanzprüfer 18A - 18D, einem Dringlichkeitsprüfer 19, einem Interaktionsprüfer 20 und einem Datenmengenprüfer 21 verbunden. Diese Prüfinstanzen berechnen für jeden Programmtitel in der Programmtitelliste 23 Zuteilungsquoten, die den relativen Anteil der verfügbaren Übertragungsressourcen bestimmen.

Der Akzeptanzprüfer 18A - 18D prüft die Akzeptanz des gegenwärtig wiedergegebene Programmtitels. Dabei können Hinweise auf verschiedene Nutzerreaktionen unterschieden werden und ggf. zu einem späteren Zeitpunkt mit anderen Systembeobachtungen korreliert werden, z.B. ob der Nutzer kurz darauf die Wiedergabe des Programmtitels verändert hat.

Der Akzeptanzprüfer 18A empfängt Daten vom Nutzererfassungssystem 13 und wertet diese aus. Der Akzeptanzprüfer 18B wertet Steuerdaten des Lautstärkereglers 4 aus. Der Akzeptanzprüfer 18C wertet weitere Steuerdaten über die Wiedergabe des aktuellen Programmtitels aus, indem z.B. erfasst wird, ob die Wiedergabe des aktuellen Programmtitels unterbrochen wurde oder wie lange dieser schon ununterbrochen wiedergegeben wird. Der Akzeptanzprüfer 18D schließlich wertet Fahrzeugdaten aus, indem z.B. die Fahrgeschwindigkeit des Fahrzeugs 1 oder Rückschlüsse auf den Fahrstil erfasst und ausgewertet werden.

Die Hinweise auf verschiedene Nutzerverhalten, die durch die einzelnen Akzeptanzprüfer 18A - 18D erfasst wurden, werden jeweils einzelnen Akzeptanzkategorien 22A - 22D zugeordnet, wie dies schematisch in der Figur 4 dargestellt ist.

Die Akzeptanzkategorie 22A entspricht der höchsten Zustimmung seitens des Nutzers. Für diese Kategorie wird davon ausgegangen, dass die Zustimmung des Nutzers so hoch ist, dass er gerne weitere solcher Programmtitel hören möchte. Je nachdem, welche Wahrscheinlichkeit für diese Kategorie ermittelt wurde, kann die Programmtitelfolge 23 dahingehend verändert werden, dass ähnliche Programmtitel in der Wiedergabereihenfolge vorgezogen werden.

Die Akzeptanzkategorie 22B entspricht einer moderaten Zustimmung seitens des Nutzers. Für diese Kategorie wird davon ausgegangen, dass es keiner Modifikation der Programmtitelfolge 23 bedarf.

Die Akzeptanzkategorie 22C entspricht einer leichten, zumindest temporären Ablehnung seitens des Nutzers. Für diese Kategorie wird davon ausgegangen, dass der aktuelle Programmtitel nicht planmäßig zu Ende gespielt werden soll und/oder dass ähnliche nachfolgende Programmtitel zumindest zeitlich etwas zurückgestellt werden sollen. Der Nutzer befindet sich beispielweise in einer Gemütsverfassung, die nicht dem aktuellen Programmtitel entspricht. Die nachfolgende Programmtitelfolge 23 wird ggf. entsprechend geändert.

Die Akzeptanzkategorie 22D entspricht einer generellen Ablehnung seitens des Nutzers. Für diese Kategorie wird davon ausgegangen, dass entsprechend ähnliche Programmtitel gänzlich aus dem Programm verbannt werden sollen. Der entsprechende Programmtitel wird beispielsweise einer Musikgruppe oder Stilrichtung zugeordnet, die bei dem Nutzer auf generelle Ablehnung stößt. Die nachfolgende Programmtitelfolge 23 wird ggf. entsprechend geändert.

Es wird nun ermittelt, mit welcher Wahrscheinlichkeit ein aktuell wiedergegebener Programmtitel bei Erfassen eines Hinweises auf ein bestimmtes Nutzerverhalten einer bestimmten Akzeptanzkategorie zuzuordnen ist. Dabei kann ein Programmtitel zunächst mit 100% Wahrscheinlichkeit der Akzeptanzkategorie 22B zugeordnet sein, bis durch die Akzeptanzprüfer 18A - 18D etwas abweichendes dazu ermittelt wird. Beispielsweise wird eine durch den Akzeptanzprüfer 18A erfasste Gutelaune-Mimik die Wahrscheinlichkeit der Akzeptanzkategorien 22A erhöht oder ein durch den Akzeptanzprüfer 18B erfasste Reduzierung der Wiedergabelautstärke die Wahrscheinlichkeit für die Akzeptanzkategorie 22C, 22D erhöht. Ein neu wiederzugebender Programmtitel kann aber insbesondere durch Ähnlichkeitsvergleiche mit anderen Programmtiteln bereits vor der Wiedergabe ein Akzeptanzprofil aufweisen, bei dem für jede der Akzeptanzkategorien 22A - 22D eine gewisse Wahrscheinlichkeit geschätzt wurde.

Gemäß einer Ausführungsvariante des erfindungsgemäßen Verfahrens kann jedem unterscheidbaren Hinweis auf ein Nutzerverhalten eine daraus resultierende Elementarwahrscheinlichkeit der Zugehörigkeit zu einer bestimmten Akzeptanzkategorie 22A - 22D bestimmt werden. Diese unabhängige Betrachtungsweise über Elementarwahrscheinlichkeiten ermöglich ein Korrelieren einzelner beobachteter Hinweise auf ein Nutzerverhalten. Werden für einen Programmtitel dann mehrere verschiedene Hinweise auf ein Nutzerverhalten erfasst, so wird die Gesamtwahrscheinlichkeit, dass der Programmtitel einer Akzeptanzkategorie zugeordnet werden kann, aufgrund der Elementarwahrscheinlichkeiten bestimmt. Für zwei Elementarwahrscheinlichkeiten, dass bei Erfassung zweier Hinweise Y1, Y2 der Programmtitel dann einer bestimmten Akzeptanzkategorie AK zuzuordnen ist, wird dann folgendermaßen berechnet:

$$P(AK|\ Y1, Y2) =$$
$$(P(AK|\ Y1) * P(AK|\ Y2))\ /\ (P(AK|\ Y1) * P(AK|\ Y2) + (1 - P(AK|\ Y1)) * (1 - P(AK|\ Y2)),$$

wobei P (AK, Y) die bedingte Wahrscheinlichkeit für die Zuordnung zur Akzeptanzkategorie AK ist, unter der Voraussetzung, dass eine Erfassung eines Hinweises Y erfolgt ist.

Alternativ können die Elementarwahrscheinlichkeiten auch in einer sogenannten "Look-Up"-Tabelle gespeichert werden, über die die Wahrscheinlichkeiten der Zugehörigkeit des betreffenden Programmtitels zu einer Akzeptanzkategorie ermittelbar ist.

Der Dringlichkeitsprüfer 19 ermittelt, wie dringend die Audiodaten eines Programmtitels herunterzuladen und zwischenzuspeichern sind. Das Übertragen und Zwischenspeichern der Audiodaten des dem aktuell wiedergegebenen Programmtitel folgenden Programmtitels ist somit dringlicher als das Übertragen und Zwischenspeichern der Audiodaten von später wiederzugebenden Programmtiteln.

Umfasst die Programmtitelfolge 23 eine Gruppe von alternativ wiederzugebenden Programmtiteln, so berücksichtigt der Dringlichkeitsprüfer 19 insbesondere auch, welcher hypothetische Anteil des wiedergegebenen Programmtitels bei seiner Beendigung welchen der alternativ nachfolgenden Programmtitel begünstigen würde. Beispielsweise wird bei regulärem Beenden des wiedergegebenen Programmtitels davon ausgegangen, dass der nächstplatzierte Programmtitel wiederzugeben sei, beim vorzeitigem Beenden hingegen wird davon ausgegangen, dass ein weiter hinten in der Programmtitelfolge 23 positionierter Alternativ-Programmtitel wiederzugeben sei. Mit dieser Strategie kann der Dringlichkeitsprüfer 19 bei Beginn der Wiedergabe eines Programmtitels zunächst den Alternativ-Programmtitel höher priorisieren, damit in dem Fall, dass tatsächlich der aktuell wiedergegebene Programmtitel abgebrochen würde, ein ausreichender Anteil des Alternativ-Programmtitels übertragen und zwischengespeichert wurde. Für das Übertragen und Zwischenspeichern des nächstplatzierten Programmtitels, der ja nur bei regulärem Beenden des aktuellen Programmtitels wiedergegeben werden soll, bleibt in diesem Fall noch ein Großteil der Wiedergabezeit des aktuellen Programmtitels, sodass erst im Verlauf der weiteren Wiedergabe die Dringlichkeit für den nächstplatzierten Programmtitel sukzessive erhöht wird.

Der Interaktionsprüfer 20 prüft, ob oder in welchem Maße der Nutzer von seiner Möglichkeit Gebrauch macht, die Programmtitelfolge 23 zu beeinflussen. Insbesondere wird berücksichtigt, wie viel Daten über die Akzeptanzprüfer 18A - 18D erfasst werden und ob es in der Vergangenheit zu Veränderungen der geplanten Programmtitelfolge gekommen ist.

Der Datenmengenprüfer 21 prüft, welche Datenmenge der Audiodaten eines bestimmten Programmtitels noch zu übertragen und zwischenzuspeichern sind. Dies ist insbesondere für Programmbeiträge mit größeren Datenmengen wichtig, die noch vorausschauender als kleinere Audiodateien vorzuladen sind.

Die Gewichtung der von jedem der einzelnen Prüfinstanzen 18A - 18D, 19-21 zugewiesenen Zuteilungsquoten wird im Laufe des Betriebs des Datenempfängers kontinuierlich überwacht und gegebenenfalls verändert.

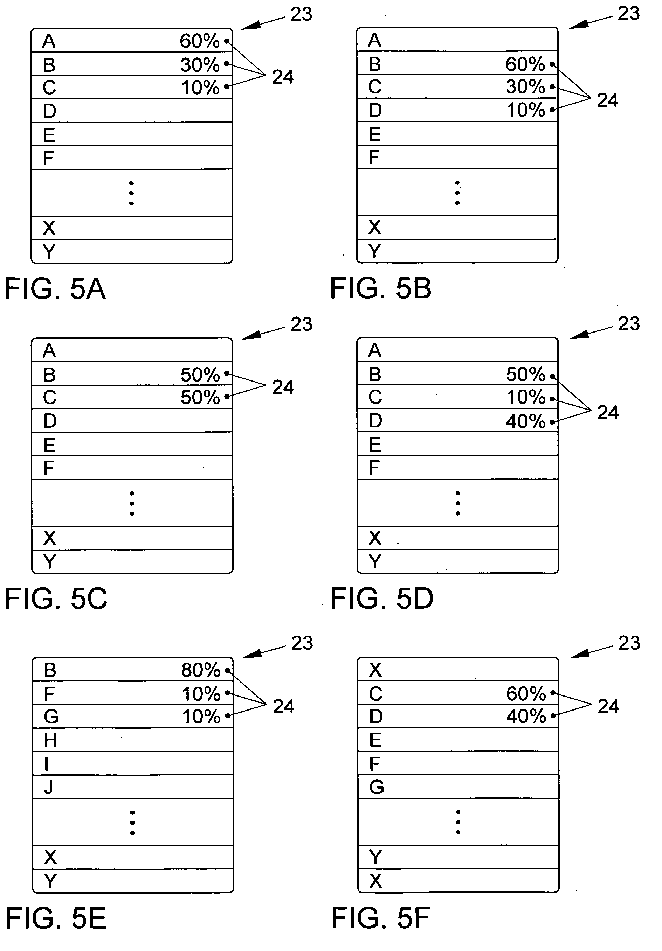

In den Figuren 5A - 5F sind schematisch Programmtitelfolgen 23 dargestellt, deren Programmtitel A - H vom Datenempfänger gemäß einem Ausführungsbeispiel des erfindungsgemäßen Verfahrens anteilige Übertragungsressourcen 24 zugewiesen wurden. Als Ausgangssituation in der Figur 5A sei das personalisierte Programm gerade erst angefordert worden. Nach einer kurzen Vorladezeit kann die Wiedergabe des ersten Programmtitels A beginnen, auch wenn die dazugehörigen Audiodaten noch nicht vollständig übertragen wurden. Aus diesem Grunde werden den Programmtiteln A, B, C 60%, 30% und 10% der anteiligen Übertragungsressourcen 24 zugewiesen.

Wenn dann die Audiodaten des Programmtitels A vollständig zwischengespeichert sind, werden die anteiligen Übertragungsressourcen 24 nun neu zugewiesen (Programmtitel B, C, D jeweils 60%, 30% und 10%, siehe Figur 5B).

In den Figuren 5C - 5F werden exemplarisch verschiedene Situationen beschrieben, die während der Wiedergabe des Programms auftreten können.

In der Figur 5C ist der Fall beschrieben, dass ein Hinweis auf ein Nutzerverhalten erfasst wird, welches auf eine starke Zustimmung des Programmtitels A hindeutet. Daraufhin wird das Äkzeptanzprofil des Programmtitels A derart verändert, dass diesem nun die Wahrscheinlichkeit für die Akzeptanzkategorie 22A erhöht wird. Ferner wird ermittelt, dass der Programmtitel C große Ähnlichkeiten mit dem Programmtitel A aufweist. Der Ressourcen-Zuteiler 17 des Datenempfängers erhöht die anteiligen Übertragungsressourcen für den Programmtitel C, weil nun eine erhöhte Wahrscheinlichkeit gegeben ist, dass bei Beendigung der Wiedergabe des Programmtitels A die Programmtitelfolge 23 verändert worden sein wird. Die anteiligen Übertragungsressourcen 24 werden auf je 50% für die Audiodaten der Programmtitel B und C festgesetzt.

In der Figur 5D ist der Fall gezeigt, dass die zu dem Programmtitel D gehörigen Audiodaten deutlich umfangreicher als die der übrigen Programmtitel B, C, E, F sind. Der Datenmengenprüfer 21 erhöht daher die anteiligen Übertragungsressourcen 24 für den Programmtitel D, während der Dringlichkeitsprüfer 19 eine weiterhin hohe Übertragungsrate für den Programmtitel B fordert, der als nächstes wiederzugeben ist.

In der Figur 5E ist der Fall gezeigt, dass der Nutzer den Programmtitel A vorzeitig beendet hat. Er hat beispielsweise durch Betätigen einer der Bedientasten 5 ein Springen zum nächsten wiederzugebenden Programmtitel erzeugt. Dies wird als Hinweis auf ein Nutzerverhalten interpretiert, die den Programmtitel A in die Akzeptanzkategorie 22D herabstuft. Wegen der Ähnlichkeit zu den Programmtiteln C, D, E werden auch diese herabgestuft und entsprechend aus der Programmtitelfolge 23 entfernt. Der Programmtitel B wird aus der Gruppe der möglichen nachfolgenden Programmtitel B, C, D, E als nachfolgender Programmtitel ausgewählt.

Weil zu dem nun erstplatzierten Programmtitel B noch Audiodaten zu übertragen und zwischenzuspeichern sind, wird vom Dringlichkeitsprüfer 19 gefordert, die anteiligen Übertragungsressourcen entsprechend zu erhöhen. Die Zuteilung der anteiligen Übertragungsressourcen 24 auf die ersten drei Programmtitel B, F, G wird nun beispielsweise auf 80%, 10%, 10% festgesetzt.

Für den in der Figur 5F dargestellten Fall, dass entweder nutzerseitig zu viele vorgeschlagene Programmtitel abgelehnt wurden und/oder dass netzseitig für eine Zeitspanne keine Übertragungsressourcen verfügbar sind, kann der erstplatzierte, vom Dienstanbieter 11 vorgeschlagene Programmtitel C nicht mehr wiedergegeben werden, ohne dass eine Programmunterbrechung wahrscheinlich würde. Es wurden für den Programmtitel C beispielsweise erst so wenig Audiodaten zwischengespeichert, dass nur noch ein kurzer Zeitraum, z.B. 10 Sekunden, überbrückbar ist. In diesem Falle wird die Programmtitelfolge an erster Position um einen lokal gespeicherten Programmtitel X ergänzt. Auf diese Weise kann dem Nutzer weiterhin ein garantiertes, unterbrechungsfreies und personalisiertes Programm angeboten werden. Vorsorglich kann für die Übertragung der nachfolgenden Programmtitel ein anderes Kodierverfahren verwendet werden. Die nachfolgenden Programmtitel C - G werden z.B. in einem Quellkodierverfahren vom Dienstanbieter 11 angefordert, welches eine geringere Datenrate benötigt. Das Quellkodierverfahren wird derart verändert, dass die benötigte Datenrate zum Echtzeitladen von z.B. 128 kbit/s auf 64 kbit/s gesenkt wird.

Für den Fall, dass die Netzverfügbarkeit andauernd schlecht ist und nur sporadisch Übertragungsressourcen verfügbar sind, kann auch ein personalisiertes Programm angeboten werden, bei welchem die Steuereinheit des Datenempfängers eine nach dem vordefinierten Algorithmus vom Empfehlungsgeber 25 erzeugte Liste von im Medienwiedergabegerät lokal gespeicherten Programmtiteln empfängt, die durch einzelne, vom Dienstanbieter vorgeschlagenen Programmtiteln ergänzt werden (nicht dargestellt).

**Bezugszeichenliste**

| | |
|---|---|
| 1 | Fahrzeug |
| 2 | Lautsprecher |
| 3 | Display |
| 4 | Lautstärkeregler |
| 5 | Bedientasten |
| 6 | CD-Spieler |
| 7 | MP3-Spieler |
| 8 | Mobilfunkmodul |
| 9 | Mobilfunknetz |
| 10 | Internet |
| 11 | Dienstanbieter |
| 12 | Steuereinheit des Datenempfängers |
| 13 | Nutzererfassungssystem |
| 14 | Zwischenspeicher des Datenempfängers |

| 15 | Schnittstelle |
|---|---|
| 16 | Prozessor Medienwiedergabesystem |
| 17 | Ressourcen-Zuteiler |
| 18 A - D | Akzeptanzprüfer durch Hinweis eines Nutzerverhaltens |
| 19 | Dringlichkeitsprüfer |
| 20 | Interaktionsprüfer |
| 21 | Datenmengenprüfer |
| 22 A - D | Akzeptanzkategorie |
| 23 | Programmtitelfolge |
| 24 | anteilige Übertragungsressourcen |
| 25 | Empfehlungsgeber |
| A - H, X - Z | Programmtitel |

**Patentansprüche**

**1.** Verfahren zum Betreiben eines Datenempfängers (8, 12, 13, 14, 15) für Audio- und/oder Videodaten, bei dem

- eine geplante und veränderbare Programmtitelfolge (23) mit mehreren Programmtiteln (A - H) erfasst wird,
- Audio- und/oder Videodaten zu wenigstens einem Programmtitel (A - E) über eine Datenverbindung (8, 9) empfangen und zwischengespeichert werden und
- Audio- und/oder Videodaten wenigstens eines Programmtitels (A) wiedergegeben werden, und
- die Übertragungsressourcen der Datenverbindung (8, 9) für zu übertragende und zwischenzuspeichernde Audio- und/oder Videodaten vom Datenempfänger (8, 12, 13, 14, 15) auf wenigstens zwei noch nicht wiedergegebene Programmtitel (B - E) aufgeteilt werden,

**dadurch gekennzeichnet, dass**

- für mehrere unterscheidbare Hinweise auf ein Nutzerverhalten (18A - 18D) ermittelt wird, mit welcher Wahrscheinlichkeit bei Erfassen eines Hinweises eines bestimmten Nutzerverhaltens (18A; 18B; 18C; 18D) dem wiedergegebenen Programmtitel (A) eine bestimmte Akzeptanzkategorie (22A; 22B; 22C; 22D) zugeordnet wird,
- in Abhängigkeit von mehreren so ermittelten Wahrscheinlichkeiten dem wiedergegebenen Programmtitel (A) ein Akzeptanzprofil (22A - 22D) zugeordnet wird und
- der relative Anteil an den Übertragungsressourcen der Datenverbindung (8, 9) für zu übertragende und zwischenzuspeichernde Audio- und/oder Videodaten wenigstens zweier noch nicht wiedergegebener Programmtitel (B - E) in Abhängigkeit von dem Akzeptanzprofil (22A - 22D) des wiedergegebenen Programmtitels (A) verändert wird.

**2.** Verfahren nach Anspruch 1,
**dadurch gekennzeichnet, dass**

- Hinweise auf ein Nutzerverhalten (18A - 18D) bezüglich einem wiedergegebenen Programmtitel (A) erfasst werden und
- der relative Anteil an den Übertragungsressourcen der Datenverbindung (8, 9) für zu übertragende und zwischenzuspeichernde Audio- und/oder Videodaten wenigstens zweier noch nicht wiedergegebener Programmtitel (B - E) in Abhängigkeit von wenigstens einem erfassten Hinweis auf ein Nutzerverhalten (18A - 18D) verändert wird.

**3.** Verfahren nach einem der vorangegangenen Ansprüche,
**dadurch gekennzeichnet,**
**dass** die Aufteilung oder Veränderung des relativen Anteils an den Übertragungsressourcen für zu übertragende und zwischenzuspeichernde Audio- und/oder Videodaten wenigstens zweier noch nicht wiedergegebener Programmtitel (B - E) von der Position eines Programmtitels (B - E) in der Programmtitelfolge (23) und/oder der verbleibenden noch zu übertragenden Datenmenge eines Programmtitels (B - E) abhängt.

**4.** Verfahren nach einem der vorangegangenen Ansprüche,
**dadurch gekennzeichnet,**
**dass** die Gewichtung der Faktoren (18A - 18D, 19 - 21), in deren Abhängigkeit die relativen Anteile an den Übertragungsressourcen für zu übertragende und zwischenzuspeichernde Audio- und/oder Videodaten verändert werden, während des Betriebs des Datenempfängers (8, 12, 13, 14, 15) verändert wird.

5. Verfahren nach einem der Ansprüche 2 bis 4,
   **dadurch gekennzeichnet,**
   **dass** die geplante Programmtitelfolge (23) in Abhängigkeit von einem Hinweis auf ein Nutzerverhalten (18A - 18D) verändert wird.

6. Verfahren nach einem der vorangegangenen Ansprüche,
   **dadurch gekennzeichnet,**
   **dass** in Abhängigkeit von Veränderungen der Programmtitelfolge (23), den verfügbaren Übertragungsressourcen, deren Variabilität und/oder der zu übertragenden Datenmenge eines dem wiedergegebenen Programmtitel (A) folgenden Programmtitels (B - H) ein Datenformat festgelegt wird, welches die Übertragungsrate der folgenden Programmtitel (B - H) bestimmt.

7. Verfahren nach einem der vorangegangenen Ansprüche,
   **dadurch gekennzeichnet, dass**

   - die Programmtitelfolge (23) lokal gespeicherte, nicht über die Datenverbindung (8, 9) übertragene Programmtitel (X - Z) umfasst,
   - wobei optional ein lokal gespeicherter Programmtitel (X) an vorderster Position der Programmtitelfolge (23) eingefügt wird, wenn durch zu geringe Übertragungsressourcen kein über die Datenverbindung (8, 9) übermittelter Programmtitel (B - H) abspielbar ist und/oder
   - wobei optional die lokal gespeicherten Programmtitel (X - Z) in der Programmtitelfolge (23) in Abhängigkeit von einem zuvor definierten Auswählalgorithmus, in Abhängigkeit von zu übertragenden Programmtiteln (A - H) in der Programmtitelfolge (23) und/oder in Abhängigkeit von der bislang erfassten Historie der Hinweise auf ein Nutzerverhalten (18A - 18D) ausgewählt werden.

8. Datenempfänger (8, 12, 13, 14, 15) umfassend

   - Mittel (8) zum Erfassen einer geplanten und veränderbaren Programmtitelfolge (23) mit mehreren Programmtiteln (A - H),
   - eine Datenschnittstelle (8) zum Empfangen von Audio- und/oder Videodaten,
   - eine Speichereinheit (14) zum Zwischenspeichern von über die Datenschnittstelle (8) empfangenen Audio- und/oder Videodaten zu wenigstens einem Programmtitel (A - E),
   - eine Schnittstelle (15) zu einem Medienwiedergabesystem (2 - 7; 16) für Audio- und/oder Videodaten wenigstens eines Programmtitels (A - H) und
   - eine Steuereinheit (12), die mit den Mitteln (8) zum Erfassen einer geplanten und veränderbaren Programmtitelfolge, der Datenschnittstelle (8), der Speichereinheit (14) und der Schnittstelle (15) zur Wiedergabevorrichtung verbunden ist, wobei mittels der Steuereinheit (12) die Übertragungsressourcen der Datenschnittstelle (8) auf zu übertragende und zwischenzuspeichernde Audio- und/oder Videodaten wenigstens zweier noch nicht wiedergegebener Programmtitel (B - E) vom Datenempfänger (8, 12, 13, 14, 15) aufteilbar sind,

   **dadurch gekennzeichnet, dass**

   - für mehrere unterscheidbare Hinweise auf ein Nutzerverhalten (18A - 18D) ermittelbar ist, mit welcher Wahrscheinlichkeit bei Erfassen eines Hinweises eines bestimmten Nutzerverhaltens (18A; 18B; 18C; 18D) dem wiedergegebenen Programmtitel (A) eine bestimmte Akzeptanzkategorie (22A; 22B; 22C; 22D) zuordenbar ist,
   - in Abhängigkeit von mehreren so ermittelten Wahrscheinlichkeiten dem wiedergegebenen Programmtitel (A) ein Akzeptanzprofil (22A - 22D) zuordenbar ist und
   - der relative Anteil an den Übertragungsressourcen der Datenverbindung (8, 9) für zu übertragende und zwischenzuspeichernde Audio- und/oder Videodaten wenigstens zweier noch nicht wiedergegebener Programmtitel (B - E) in Abhängigkeit von dem Akzeptanzprofil (22A - 22D) des wiedergegebenen Programmtitels (A) veränderbar ist.

9. Medienwiedergabesystem (2 - 7; 16) für Audio- und/oder Videodaten für ein Fahrzeug (1), das mit einem Datenempfänger (8, 12, 13, 14, 15) gemäß Anspruch 8 verbunden ist.

**Claims**

1. Method for operating a data receiver (8, 12, 13, 14, 15) for audio and/or video data, in which

   - a planned and variable sequence of program titles (23) having a number of program titles (A-H) is recorded,
   - audio and/or video data for at least one program title (A-E) are received and buffered via a data link (8, 9) and
   - audio and/or video data of at least one program title (A) are reproduced, and
   - the transmission resources of the data link (8, 9) for audio and/or video data to be transmitted and buffered are distributed by the data receiver (8, 12, 13, 14, 15) to at least two program titles (B-E) not yet reproduced,

   **characterized in that**

   - for a plurality of distinguishable references to a user behaviour (18A-18D), the probability is determined with which a particular acceptance category (22A; 22B; 22C; 22D) is allocated to the reproduced program title (A) on the recording of a reference to a particular user behaviour (18A; 18B; 18C; 18D),
   - in dependence on a plurality of probabilities thus determined, an acceptance profile (22A-22D) is allocated to the reproduced program title (A), and
   - the relative proportion of the transmission resources of the data link (8, 9) for audio and/or video data to be transmitted and buffered of at least two program titles (B-E) not yet reproduced is changed in dependence on the acceptance profile (22A-22D) of the program title (A) reproduced.

2. Method according to Claim 1,
   **characterized in that**

   - references to a user behaviour (18A-18D) with respect to a reproduced program title (A) are recorded and
   - the relative proportion of the transmission resources of the data link (8, 9) for audio and/or video data to be transmitted and buffered of at least two program titles (B-E) not yet reproduced is changed in dependence on at least one recorded reference to a user behaviour (18A-18D).

3. Method according to one of the preceding claims,
   **characterized in that**
   the distribution or change of the relative proportion of the transmission resources for audio and/or video data to be transmitted and buffered of at least two program titles (B-E) not yet reproduced depends on the position of a program title (B-E) in the sequence of program titles (23) and/or the remaining volume of data of a program title (B-E) still to be transmitted.

4. Method according to one of the preceding claims,
   **characterized in that** the weighting of the factors (18A-18D, 19-21), in dependence on which the relative proportions of the transmission resources of audio and/or video data to be transmitted and buffered are changed, is changed during the operation of the data receiver (8, 12, 13, 14, 15) .

5. Method according to one of Claims 2 to 4,
   **characterized in that**
   the planned sequence of program titles (23) is changed in dependence on a reference to a user behaviour (18A-18D).

6. Method according to one of the preceding claims,
   **characterized in that,**
   in dependence on changes in the sequence of program titles (23), the available transmission resources, their variability and/or the volume of data to be transmitted of a program title (B-H) following the reproduced program title (A), a data format is set which determines the transmission rate of the following program titles (B-H).

7. Method according to one of the preceding claims,
   **characterized in that**

   - the sequence of program titles (23) comprises locally stored program titles (X-Z) not transmitted via the data link (8, 9),
   - a locally stored program title (X) being optionally inserted at the front position of the sequence of program titles (23) if no program title (B-H) transmitted via the data link (8, 9) can be replayed due to insufficient transmission resources and/or

- the locally stored program titles (X-Z) in the sequence of program titles (23) being optionally selected in dependence on a previously defined selection algorithm, in dependence on program titles (A-H) to be transmitted in the sequence of program titles (23) and/or in dependence on the previously recorded history of the references to a user behaviour (18A-18D).

**8.** Data receiver (8, 12, 13, 14, 15) comprising

- means (8) for recording a planned and changeable sequence of program titles (23) having a number of program titles (A-H),
- a data interface (8) for receiving audio and/or video data,
- a memory unit (14) for buffering audio and/or video data for at least one program title (A-E), received via the data interface (8),
- an interface (15) to a media reproduction system (2-7; 16) for audio and/or video data of at least one program title (A-H) and
- a control unit (12) which is connected to the means (8) for recording a planned and changeable sequence of program titles, the data interface (8), the memory unit (14) and the interface (15) to the reproduction device, wherein

by means of the control unit (12), the transmission resources of the data interface (8) can be distributed by the data receiver (8, 12, 13, 14, 15) to audio and/or video data to be transmitted and buffered of at least two program titles (B-E) not yet reproduced,
**characterized in that**

- for a plurality of distinguishable references to a user behaviour (18A-18D), the probability can be determined with which a particular acceptance category 22A; 22B; 22C; 22D) can be allocated to the reproduced program title (A) on the recording of a reference to a particular user behaviour (18A; 18B; 18C; 18D),
- in dependence on a plurality of probabilities thus determined, an acceptance profile (22A-22D) can be allocated to the reproduced program title (A), and
- the relative proportion of the transmission resources of the data link (8, 9) for audio and/or video data to be transmitted and buffered of at least two program titles (B-E) not yet reproduced can be changed in dependence on the acceptance profile (22A-22D) of the program title (A) reproduced.

**9.** Media reproduction system (2-7; 16) for audio and/or video data for a vehicle (1) which is connected to a data receiver (8, 12, 13, 14, 15) according to Claim 8.

## Revendications

**1.** Procédé d'utilisation d'un récepteur (8, 12, 13, 14, 15) de données audio et/ou de données vidéo, dans lequel une succession programmée et modifiable (23) de titres de programme présentant plusieurs titres de programme (A-H) et saisie,
des données audio et/ou des données vidéo concernant au moins un titre de programme (A-H) sont reçues par l'intermédiaire d'une liaison de données (8, 9) et conservées en mémoire temporaire et
des données audio et/ou des données vidéo d'au moins un titre de programme (A) sont reproduites et
les ressources de transfert de la liaison (8, 9) de données audio et/ou de données vidéo à transférer et à conserver temporairement en mémoire par le récepteur (8, 12, 13, 14, 15) de données sont réparties sur au moins deux titres de programme (B-E) non encore reproduits,
**caractérisé en ce que**
pour plusieurs indications distinctives concernant un comportement (18A-18D) de l'utilisateur, on détermine à quelle probabilité lors de la saisie d'une indication d'un comportement défini (18A; 18B; 18C; 18D) de l'utilisateur une catégorie d'acceptation définie (22A; 22B; 22C; 22D) est associée au titre de programme (A) reproduit,
en fonction de plusieurs probabilités ainsi déterminées, un profil d'acceptation (22A-22D) est associé au titre de programme (A) reproduit et
la proportion relative des ressources de transmission de la liaison (8, 9) des données audio et/ou des données vidéo à transférer et à conserver temporairement en mémoire d'au moins deux titres de programme (B-E) non encore reproduits est modifiée en fonction du profil d'acceptation (22A-22D) du titre de programme (A) reproduit.

**2.** Procédé selon la revendication 1, **caractérisé en ce que**
des données sur le comportement (18A-18D) de l'utilisateur concernant un titre de programme (A) reproduit sont saisies et
la proportion relative des ressources de transmission de la liaison (8, 9) des données audio et/ou des données vidéo à transférer et à conserver temporairement en mémoire d'au moins deux titres de programme (B-E) non encore reproduits est modifiée en fonction d'au moins une indication saisie concernant le comportement (18A-18D) de l'utilisateur.

**3.** Procédé selon l'une des revendications précédentes, **caractérisé en ce que** la répartition ou la modification de la proportion relative des ressources de transmission de la liaison (8, 9) des données audio et/ou des données vidéo à transférer et à conserver temporairement en mémoire d'au moins deux titres de programme (B-E) non encore reproduits dépend de la position d'un titre de programme (B-E) dans la succession (23) de titres de programme et/ou de la quantité de données restantes encore à transférer d'un titre de programme (B-E).

**4.** Procédé selon l'une des revendications précédentes, **caractérisé en ce que** la pondération des facteurs (18A-18D, 19, 21) en fonction desquels les proportions relatives des ressources de transfert des données audio et/ou des données vidéo qui doivent être transférées et conservées temporairement en mémoire sont modifiées est modifiée pendant l'utilisation du récepteur (8, 12, 13, 14, 15) de données.

**5.** Procédé selon l'une des revendications 2 à 4, **caractérisé en ce que** la succession programmée (23) de titres de programme est modifiée en fonction d'une indication concernant le comportement (18A-18D) de l'utilisateur.

**6.** Procédé selon l'une des revendications précédentes, **caractérisé en ce qu'**en fonction des modifications de la succession (23) de titres de programme, des ressources de transfert disponibles de leur variabilité et/ou de la quantité de données à transmettre d'un titre de programme (B-H) qui suit le titre de programme (A) reproduit est défini un format de données qui définit le débit de transfert des titres de programme (B-H) suivants.

**7.** Procédé selon l'une des revendications précédentes, **caractérisé en ce que** la succession (23) de titres de programme comporte des titres de programme (X-Z) conservés localement en mémoire et non transmis par la liaison de données (8, 9),
un titre de programme (X) conservé en mémoire local étant facultativement inséré en première position dans la succession (23) de titres de programme si du fait de ressources de transfert trop petites, aucun titre de programme (B-H) transféré par l'intermédiaire de la liaison de données (8, 9) ne peut être joué et/ou les titres de programme (X-Z) conservés en mémoire locale de la succession (23) de titres de programme sont facultativement sélectionnés en fonction d'un algorithme préalablement défini de sélection, en fonction de titres de programme (A-H) à transmettre de la succession (23) de titres de programme et/ou en fonction de l'historique saisit jusque là des indications concernant le comportement (18A-18D) de l'utilisateur.

**8.** Récepteur (8, 12, 13, 14, 15) de données comprenant
des moyens (8) de saisie d'une succession (23) programmée et modifiable de titres de programme présentant plusieurs titres de programme (A-H),
une interface de données (8) permettant de recevoir des données audio et/ou des données vidéo,
une unité de mémoire (14) qui conserve temporairement en mémoire des données audio et/ou des données vidéo reçues par l'intermédiaire de l'interface de données (8) à propos d'au moins un titre de programme (A-E),
une interface (15) avec un système (2-7; 16) de reproduction de supports de données audio et/ou des données vidéo d'au moins un titre de programme (A-H) et
une unité de commande (12) reliée aux moyens (8) de saisie d'une succession programmée et modifiable de titres de programme, à l'interface de données (8), à l'unité de mémoire (14) et à l'interface (15) avec l'ensemble de reproduction,
les ressources de transfert de l'interface de données (8) pouvant au moyen de l'unité de commande (12) être réparties entre les données audio et/ou les données vidéo à transférer et à conserver temporairement en mémoire d'au moins deux titres de programme (B-E) non encore reproduits par le récepteur (8, 12, 13, 14, 15) de données,
**caractérisé en ce que**
pour plusieurs indications distinctives concernant un comportement (18A-18D) de l'utilisateur, on détermine à quelle probabilité lors de la saisie d'une indication d'un comportement défini (18A; 18B; 18C; 18D) de l'utilisateur une catégorie d'acceptation définie (22A; 22B; 22C; 22D) est associée au titre de programme (A) reproduit,
en fonction de plusieurs probabilités ainsi déterminées, un profil d'acceptation (22A-22D) est associé au titre de programme (A) reproduit et

la proportion relative des ressources de transmission de la liaison (8, 9) des données audio et/ou des données vidéo à transférer et à conserver temporairement en mémoire d'au moins deux titres de programme (B-E) non encore reproduits est modifiée en fonction du profil d'acceptation (22A-22D) du titre de programme (A) reproduit.

9. Système (2-7; 16) de reproduction de supports de données audio et/ou de données vidéo pour un véhicule (1), relié à un récepteur (8, 12, 13, 14, 15) de données selon la revendication 8.

FIG. 1

FIG. 2

FIG. 3

FIG. 4

FIG. 5A

FIG. 5B

FIG. 5C

FIG. 5D

FIG. 5E

FIG. 5F

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20110035031 A1
- DE 10119067 A1
- DE 102010008427 A1
- US 2007263966 A1